# EUROPEAN PATENT SPECIFICATION

(11) **EP 3 885 461 B1**
(45) Date of publication and mention of the grant of the patent: **03.05.2023**
(21) Application number: 19901835.9
(22) Date of filing: 27.12.2019
(51) Int. Cl.: C22C 38/00, C22C 38/02, C22C 38/04, C21D 1/28, C21D 1/84, C21D 8/02, C21D 9/46

(54) **GRADIENT STEEL MATERIAL HAVING SURFACE LAYER WITH FERRITE AND INNER LAYER WITH FERRITE + PEARLITE AND MANUFACTURING METHOD**
GRADIENTENSTAHLMATERIAL MIT EINER OBERFLÄCHENSCHICHT MIT FERRIT UND INNENSCHICHT MIT FERRIT + PERLIT UND HERSTELLUNGSVERFAHREN
MATÉRIAU D'ACIER À GRADIENT AYANT UNE COUCHE DE SURFACE COMPRENANT DE LA FERRITE ET UNE COUCHE INTERNE COMPRENANT DE LA FERRITE ET DE LA PERLITE ET PROCÉDÉ DE FABRICATION

(30) Priority: 28.12.2018 CN 201811622955
(43) Date of publication of application: 29.09.2021
(73) Proprietor: BAOSHAN IRON & STEEL CO., LTD., Shanghai 201900 (CN)
(72) Inventor: ZHANG, Suoquan, Shanghai 201900 (CN); JIAO, Sihai, Shanghai 201900 (CN); DING, Jianhua, Shanghai 201900 (CN); LIANG, Xiaojun, Shanghai 201900 (CN)
(74) Representative: Maiwald GmbH
(86) International application number: PCT/CN2019/129096
(87) International publication number: WO 2020/135691

(56) References cited:
- EP-A1- 3 088 544
- WO-A1-2017/099433
- WO-A1-2018/110152
- CN-A- 108 085 591

## Description

### TECHNICAL FIELD

The present invention relates to a gradient steel material, in particular to a gradient steel material having a surface layer with ferrite and an inner layer with ferrite+pearlite, and a manufacturing method.

### BACKGROUND

The strength and plasticity of steel materials are often two contradictory property indicators. It is often difficult to obtain satisfactory plasticity while pursuing strength. For some materials used for twisting or bending, the maximum deformation occurs on the surface layers of the materials. During the twisting or bending, the strain becomes smaller and smaller from the surface to the core, and the plasticity requirement is getting lower and lower. Therefore, if a material having a surface layer with high plasticity but slightly low strength and an inner layer with slightly low plasticity but high strength can be developed, it will be very helpful to solve the problem. While the surface material meets the large deformation of the surface layer, the inner material provides high strength. In this context, it is of great significance to develop a gradient steel material with different surface layer microstructure and inner layer microstructure.

The existing solutions are mainly to achieve the compounding of different materials through methods such as rolling cladding, explosive compounding and bonding compounding. There are many patents in this area, more than 1000. For example, the rolled clad plate produced by Baosteel as a leader is a clad plate product, with both properties such as corrosion resistance and other properties of the stainless steel, nickel-based alloys and titanium alloys of the surface layer and high strength of matrix materials, which is obtained by compounding functional materials such as stainless steel, nickel-based alloys and titanium alloys with structural materials such as carbon steel through a method of rolling after assembly, thereby achieving further upgrades in material functions. Chinese patents such as CN201110045798.8, CN201310211969.9, CN201410707715.0, CN201310212003.7, CN201310213371.3, CN201510173144.1, CN201611223874.9, CN201510621011.6 and CN201510173145.6 all introduce such rolling cladding technologies. In addition, explosive compounding has also been used in some applications. According to this technology, explosives are evenly distributed on surface metal and detonated to compound the surface metal and the base metal. Chinese patents CN201520878950.4, CN201510738639.4, CN201620972383.3 etc. introduce this type of related technologies. There are also many patents where metals or non-metals are bonded together through bonding methods to obtain clad plates meeting functional requirements, such as Chinese patents CN201720527381.8, CN201810506236.0 and CN201711015280.3. Combining the methods disclosed in the above documents, currently two or more pieces of different materials are combined together mainly through different metallurgical or mechanical compound methods to have different microstructures and special functions.

In order to develop novel heat-resistant materials that can withstand large temperature differences, Japanese scholars Masayuki Niino et al. first proposed the concept of a gradient material. The gradient material is a novel composite material, and compared with traditional composite materials, the gradient material has the characteristic of continuous changes of tissue and mechanical properties and the like and has no obvious interface, which can effectively alleviate and eliminate material failure due to thermal stress damage at the interface. Northeastern University conducted unidirectional cooling on steel plates through controlled cooling, which results in a gradient change in the steel microstructure, a microstructure with high strength, high hardness and high wear resistance, such as martensite or bainite, is distributed on the surface; and a microstructure with high toughness and good plasticity, such as a ferrite or pearlite, is distributed inside the material. For the material of which the microstructures are in gradient distribution and the microstructures on two sides have respective property advantages, the side with high strength and high hardness can meet the demand for strength and wear resistance; and the side with high toughness and good plasticity can meet the demand for toughness and machining deformation.

Large deformation technologies can also effectively refine the microstructure and achieve gradient changes in material microstructures or properties. At present, the most widely used large deformation technologies include equal channel angle pressing (ECAP), ultrasonic shot peening (USP), surface mechanical attrition treatment (SMAT), high pressure torsion (HPT), and so on. All the above studies achieve the gradient changes in the mechanical properties and the microstructure on material surfaces by refining the microstructure with the large deformation technologies.

WO 2018/110152 A1 discloses a steel plate, wherein a plate-thickness center part has a main phase comprising ferrite and a second phase comprising one or more types selected from pearlite, pseudo-pearlite, and upper bainite.

### SUMMARY

The present invention aims to provide a gradient steel material having a surface layer with ferrite and an inner layer with ferrite+pearlite, and a manufacturing method, the steel material does not need to be obtained by means of the compound preparation of different materials as only a single material is processed, and at the same time, the components of the steel material is simple; the steel material of the present invention is an continuous material, although the internal microstructure and the external microstructure are different, the difference is a gradual process, and the metallurgical strength at the interface is good; and meanwhile, the whole material has a low carbon content, which ensures good welding property.

In order to achieve the above objective, the technical solution of the present invention is:
a gradient steel material having a surface layer of ferrite and an inner layer of ferrite+pearlite comprises the following components in percentage by weight: 0<C≤0.15%, 0<Si≤1%, 0<Mn≤1.5%, the balance of Fe and inevitable impurities, the surface layer of the steel material is ferrite, and the inner layer is ferrite+pearlite. Wherein, the surface layer thickness varies according to the thickness of the steel plate, and is usually within 1 mm.

The surface layer of the gradient steel material is a ferrite, with a low carbon content not higher than 0.02 wt%, where 0.02 wt% is the result of keeping two decimal places, that is, it covers a range of values from 0.015 wt% to 0.024 wt%, preferably, the carbon content of the surface layer is not higher than 0.022 wt%; and the carbon content of the inner layer is relatively high, and is higher than the average carbon content of the whole gradient steel material, that is, the carbon content of the surface layer of the steel material is lower than the carbon content of the inner layer of the steel material.

The manufacturing method of a gradient steel material having a surface layer with ferrite and an inner layer with ferrite+pearlite according to the present invention includes: smelting, casting, rolling and heat treatment; wherein in the heat treatment step, a steel material is heated above the austenitizing temperature Ac3, and hold at the temperature more than 3 min to ensure that the material is completely austenitized; and subsequently, it is cooled to a temperature below Ar1 at a cooling rate of less than 0.5°C/s.

The idea of the method according to the present invention is that during the heat treatment, the whole steel material is heated for completely austenitization, and then slowly cooled, so that the surface layer of the material preferentially obtains the ferrite. Since the solid solubility of carbon in the ferrite is relatively low, the new ferrite releases carbon into the internal austenite, and thus the internal austenite tends to be more stable. As the ferrite further nucleates and grows up, the surface ferrite layer becomes thicker and thicker, the carbon content in the inner austenite becomes higher and higher, and the microstructure becomes more and more stable. In the subsequent further cooling process, the internal austenite transforms into a mixed microstructures of ferrite and pearlite.

Compared with clad plates obtained through rolling cladding, explosive compounding and bonding compounding, only one material is rolled and subjected to heat treatment in the present invention, and there is no need to subject two materials to assembly and other treatments. At the same time, in the final product, the steel material is an continuous material. Although the internal microstructure and the external microstructure are different, the difference is a gradual process, and the metallurgical strength at the interface is good.

In the prior art, a steel plate is subjected to unidirectional cooling through controlled cooling to achieve a gradient change in the microstructure, a microstructure with high strength, high hardness and high wear resistance, such as a martensite or bainite, is distributed on the surface; and a microstructure with high toughness and good plasticity, such as a ferrite or pearlite, is distributed inside the material, since the surface of the material cools quickly and the inner layer cools slowly during the cooling process. However, the present invention desires to obtain a microstructure with high toughness and good plasticity distributed on the surface and a microstructure with high strength, high hardness and high wear resistance distributed inside. Therefore, the present invention is achieved by controlling the cooling rates within a certain temperature range so that the surface layer of the material undergoes phase transformation first while the inner layer does not undergo phase transformation temporarily, and finally a ferrite microstructure with good plasticity on the surface layer and a pearlite and ferrite microstructure with high strength on the inner layer are obtained. When the inner layer is a pearlite+ferrite, the strength is greater than that of the outer layer of pure ferrite, so that the material is conducive to processing methods for large surface deformations such as bending and torsion. Meanwhile, in the present invention, since carbon in the surface layer transfers to the inner layer through ultra-long range diffusion, internal carbon is increased and the strength is increased, but the overall carbon content of the material is not high, and good welding property is maintained.

At the same time, the present invention does not need to refine the microstructure through the large deformation technology, thus the gradient changes in the mechanical properties and the microstructure are achieved on the surface of the material, and the manufacturing method is simple.

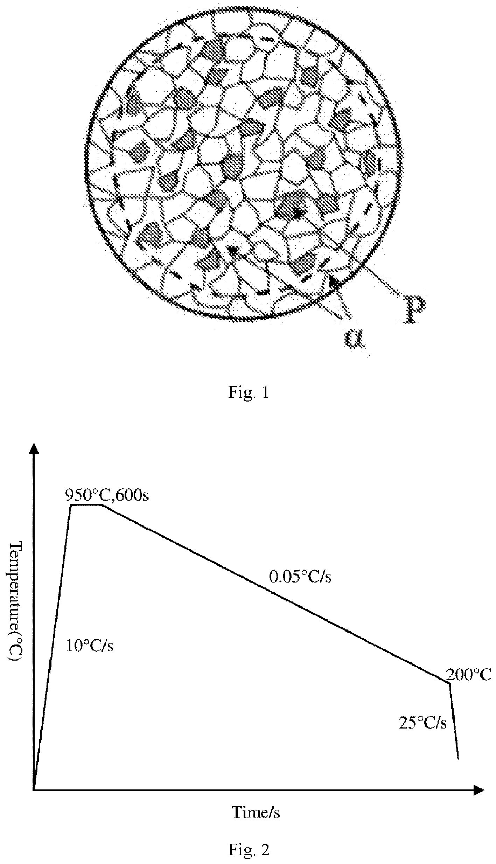

The material obtained by the method of the present invention is as shown in Fig. 1: the outer layer microstructure of the material is ferrite, as shown by the part outside the dashed circle in Fig. 1, and the inner layer microstructure is a mixed microstructures of ferrite and pearlite, as shown by the part inside the dashed circle in Fig. 1.

The beneficial effects of the present invention are as follows:
The gradient steel material having the surface layer with ferrite and the inner layer with ferrite+pearlite can obtain a ferrite layer with good plasticity on the surface layer and a mixed microstructures of ferrite and pearlite with high strength in the inner layer, and compared with the prior art, the steel material has the following advantages:
(1) There is no need to compound two materials, and only a single material is processed and prepared.
(2) The method of the present invention is short in process flow, simple in procedure and low in cost.
(3) The steel plate of the present invention is an continuous material, the difference of the microstructure on the two sides is a gradual process, and the metallurgical strength at the interface is good.
(4) In the present invention, since carbon in the surface layer transfers to the inner layer through ultra-long range diffusion, internal carbon is increased and the strength is increased, but the overall carbon content of the material is not high, and good welding property is maintained.

### BRIEF DESCRIPTION OF THE DRAWINGS

Fig. 1 is a schematic diagram of microstructures of a gradient steel material of the present invention, wherein α represents ferrite, and P represents pearlite;
Fig. 2 is a schematic diagram of a heat treatment process in examples of a manufacturing method of the present invention;
Fig. 3 is a microstructure diagram of a whole cross-section of a sample in Example 1 of the present invention;
Fig. 4 is a microstructure diagram of a near-surface layer of a sample in Example 1 of the present invention; and
Fig. 5 is an enlarged microstructure diagram of an inner layer of a sample in Example 1 of the present invention.

### DETAILED DESCRIPTION

The present invention will be further illustrated below in conjunction with embodiments and accompanying drawings.

The components in the examples and the comparative embodiments of the present invention are shown in Table 1, and the balance of Fe and unavoidable impurities. The manufacturing method for a steel material is as follows: the steel material obtained through converter or electric furnace smelting, heating and rolling is then heat-treated to finally obtain a gradient steel material having a surface layer with ferrite and an inner layer with ferrite+pearlite.

The comparative examples of the application intend to illustrate that when the content of C, Si and Mn is not within the range of 0<C≤0.15%, 0<Si≤1%, 0<Mn≤1.5% as defined in the application, or the cooling rate does not meet the definition of the application, the microstructure of the gradient steel material having the surface layer with ferrite and the inner layer with ferrite+pearlite cannot be obtained.

Table 2 shows the heat treatment process in the examples of the manufacturing method of the present invention and the comparative examples. Fig. 1 shows the microstructure of the gradient steel material of the present invention, the surface layer is a ferrite, and the inner layer is a mixed microstructures of ferrite and pearlite. Fig. 2 shows a heat treatment process in examples of the manufacturing method of the present invention.

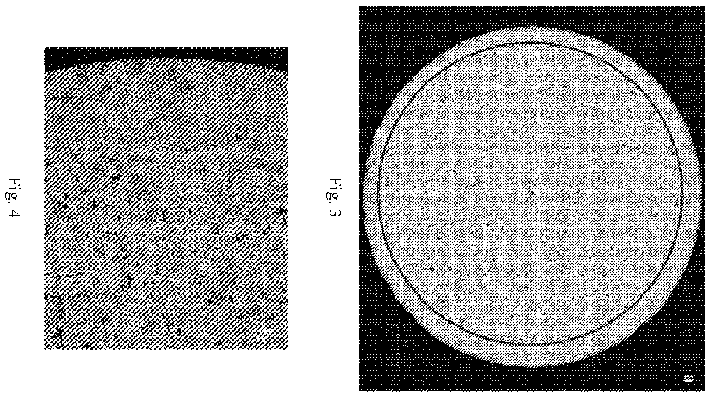

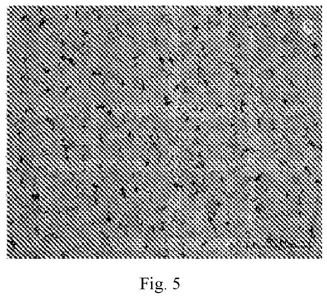

Fig. 3 shows a final microstructure of Example 1. It can be found from Fig. 3 that the surface layer is a ferrite within a range of about 450 µm, and the inner layer is a mixed microstructures of ferrite and pearlite. Fig. 4 is an enlarged metallograph of the near-surface layer of the sample, and it can be seen that the surface microstructure is a pure ferrite. Fig. 5 is an enlarged metallograph of the inner layer of the sample, and it can be seen that the inner layer microstructure is a mixed microstructures of ferrite and pearlite.

**Table 1 Unit: weight percentages**

| | C | Si | Mn |
|---|---|---|---|
| Example 1 | 0.054 | 0.26 | 0.51 |
| Example 2 | 0.075 | 0.252 | 0.49 |
| Example 3 | 0.081 | 0.243 | 1.23 |
| Example 4 | 0.105 | 0.356 | 0.56 |
| Example 5 | 0.112 | 0.366 | 0.76 |
| Comparative Example 1 | 0.054 | 0.26 | 0.51 |
| Comparative Example 2 | 0.15 | 1.5 | 0.48 |

**Table 2**

| | Heating temperature | Holding time | Slow cooling speed | Slow cooling final temperature | Surface layer microstru cture | Inner layer microstru cture |
|---|---|---|---|---|---|---|
| Example 1 | 950 °C | 600s | 0.05 °C /s | 200 °C | ferrite | ferrite +pearlite |
| Example 2 | 950°C | 600s | 0.10°C /s | 600 °C | ferrite | ferrite +pearlite |
| Example 3 | 1000 °C | 300s | 0.05 °C /s | 20 °C | ferrite | ferrite +pearlite |
| Example 4 | 1000 °C | 300s | 0.2°C/s | 200 °C | ferrite | ferrite +pearlite |
| Example 5 | 1000 °C | 300s | 0.3 °C/s | 600 °C | ferrite | ferrite +pearlite |
| Comparative Example 1 | 1000 °C | 300s | 0.5°C/s | 600 °C | ferrite +pearlite | ferrite +pearlite |
| Comparative Example 2 | 1000 °C | 300s | 0.05 °C /s | 600 °C | ferrite +pearlite | ferrite +pearlite |

## Claims

1. A gradient steel material having a surface layer of ferrite and an inner layer of ferrite+pearlite, comprising the following components in percentage by weight: 0<C≤0.15%, 0<Si≤1%, 0<Mn≤1.5%, and the balance of Fe and inevitable impurities, the surface layer of the gradient steel material is ferrite, and the inner layer is ferrite+pearlite, wherein the surface layer of the gradient steel material is a ferrite with a carbon content not higher than 0.02 wt%; and the carbon content of the surface layer of the gradient steel material is lower than the carbon content of the inner layer of the gradient steel material.

2. A manufacturing method of a gradient steel material having a surface layer of ferrite and an inner layer of ferrite+pearlite according to claim 1, including: smelting, casting, rolling and heat treatment; wherein in the heat treatment step, a steel material is heated above the austenitizing temperature Ac3, and the temperature is kept above 3 min to ensure that the material is completely austenitized; and subsequently, it is cooled to a temperature below Ar1 at a cooling rate of less than 0.5°C/s.

## Patentansprüche

1. Gradientenstahlmaterial mit einer Oberflächenschicht aus Ferrit und einer Innenschicht aus Ferrit + Perlit, umfassend die folgenden Komponenten in Gewichtsprozent: 0 < C ≤ 0,15 %, 0 < Si ≤ 1 %, 0 < Mn ≤ 1,5 % und den Rest von Fe und unvermeidlichen Verunreinigungen, wobei die Oberflächenschicht des Gradientenstahlmaterials ein Ferrit ist und die Innenschicht Ferrit + Perlit ist, wobei die Oberflächenschicht des Gradientenstahlmaterials ein Ferrit mit einem Kohlenstoffgehalt von nicht mehr als 0,02 Gewichtsprozent ist und der Kohlenstoffgehalt der Oberflächenschicht des Gradientenstahlmaterials niedriger ist als der Kohlenstoffgehalt der Innenschicht des Gradientenstahlmaterials.

2. Verfahren zur Herstellung eines Gradientenstahlmaterials mit einer Oberflächenschicht aus Ferrit und einer Innenschicht aus Ferrit + Perlit nach Anspruch 1, umfassend: Schmelzen, Gießen, Walzen und Wärmebehandlung, wobei in dem Wärmebehandlungsschritt ein Stahlmaterial über die Austenitisierungstemperatur Ac3 erhitzt wird und die Temperatur über 3 min gehalten wird, um sicherzustellen, dass das Material vollständig austenitisiert ist, und es anschließend auf eine Temperatur unter Ar1 mit einer Kühlrate von weniger als 0,5 °C/s abgekühlt wird.

## Revendications

1. Matériau en acier à gradient ayant une couche de surface en ferrite et une couche intérieure en ferrite+perlite, comprenant les composants suivants en pourcentages en poids : 0 < C ≤ 0,15 %, 0 < Si ≤ 1 %, 0 < Mn ≤ 1,5 %, et pour le reste du Fe et des impuretés inévitables, la couche de surface du matériau en acier à gradient étant en ferrite, et la couche intérieure étant en ferrite+perlite, dans lequel la couche de surface du matériau en acier à gradient est une ferrite ayant une teneur en carbone non supérieure à 0,02 % en poids ; et la teneur en carbone de la couche de surface du matériau en acier à gradient est inférieure à la teneur en carbone de la couche intérieure du matériau en acier à gradient.

2. Procédé de fabrication d'un matériau en acier à gradient ayant une couche de surface en ferrite et une couche intérieure en ferrite + perlite selon la revendication 1, comprenant : une fonte, une coulée, un laminage, et un traitement thermique ; dans lequel, dans l'étape de traitement thermique, un matériau en acier est chauffé au-delà de la température d'austénitisation Ac3, et la température est maintenue plus de 3 minutes pour assurer une austénitisation complète du matériau ; et ensuite il est refroidi à une température inférieure à Ar1 à une vitesse de refroidissement inférieure à 0,5°C/s.
